# FASCICULE DE BREVET EUROPEEN

(11) **EP 3 251 895 B1**
(45) Date de publication et mention de la délivrance du brevet: **26.06.2019**
(21) Numéro de dépôt: 17170689.8
(22) Date de dépôt: 11.05.2017
(51) Int. Cl.: B60Q 1/076, F21S 45/43, F21S 45/49

(54) **DISPOSITIF D'ÉCLAIRAGE ET/OU DE SIGNALISATION D'UN VÉHICULE AUTOMOBILE**
VORRICHTUNG ZUR BELEUCHTUNG UND/ODER SIGNALISIERUNG FÜR KRAFTFAHRZEUG
LIGHTING AND/OR SIGNALLING DEVICE FOR A MOTOR VEHICLE

(30) Priorité: 31.05.2016 FR 1654917
(43) Date de publication de la demande: 06.12.2017
(73) Titulaire: Valeo Vision, 93012 Bobigny Cedex (FR)
(72) Inventeur: CHOLLEY, Benoit, 49000 ANGERS (FR)

(56) Documents cités:
- EP-A1- 2 020 336
- EP-A1- 2 687 406
- FR-A1- 2 952 870
- FR-A1- 2 965 039
- US-A1- 2015 176 795

## Description

La présente invention concerne un dispositif d'éclairage et/ou de signalisation d'un véhicule automobile, et plus particulièrement un module lumineux rotatif, apte à pivoter en fonction de la trajectoire suivie par le véhicule, équipant un tel dispositif.

Un véhicule automobile est équipé de projecteurs, ou phares, formant des dispositifs d'éclairage et/ou de signalisation destinés à illuminer la route devant le véhicule, la nuit ou en cas de luminosité réduite, par un faisceau lumineux global. Ces projecteurs, un projecteur gauche et un projecteur droit, comportent un ou plusieurs modules lumineux adaptés à générer et diriger un faisceau lumineux intermédiaire dont l'addition forme ledit faisceau lumineux global.

Les acteurs du marché automobile ont développé, notamment dans un souci de confort visuel du conducteur et de sécurité de conduite une pluralité de fonctions d'éclairage complémentaires, parmi lesquels on peut notamment identifier la fonction d'éclairage directionnel, plus connu sous l'acronyme anglais DBL (pour Dynamic Bending Light). L'objectif d'une telle fonction est d'éclairer dynamiquement les virages lorsque le véhicule tourne. A cet effet, il est connu de monter le module lumineux pivotant autour d'un axe de rotation sensiblement vertical, de sorte que, dans un virage, le faisceau projeté en sortie du projecteur n'est plus orienté dans l'axe longitudinal du véhicule mais vers l'intérieur du virage.

Le domaine de l'invention est, d'une façon générale, celui des projecteurs pour véhicules automobiles remplissant la fonction d'éclairage directionnel. Dans ce contexte, le document FR2965039 divulgue un module lumineux apte à être monté en rotation dans un boîtier d'un dispositif d'éclairage par l'intermédiaire d'une embase fixe. L'embase comporte d'une part des moyens motorisés d'entraînement en rotation du module et d'autre part au moins un palier de guidage en rotation du module, à l'opposé des moyens motorisés par rapport au module, afin d'assurer la rotation de celui-ci autour de l'axe d'entraînement. Le palier de guidage en rotation est notamment constitué d'une demi-coquille rapportée contre l'embase pour enserrer un pion de forme et de dimensions correspondantes embarqué sur le module, et plus particulièrement sur une enveloppe du module permettant par ailleurs la mise en position et la fixation d'une source lumineuse et d'un système optique de projection associé, ainsi que la mise en position et la fixation d'organes de refroidissement, parmi lesquels un radiateur et un ventilateur. L'enveloppe du module est configurée pour coopérer avec les éléments d'entraînement et de guidage en rotation portés par l'embase, et la rotation de cette enveloppe génère la rotation de chacune des pièces composant le module. On comprend que le nombre important de pièces rapportées sur l'enveloppe alourdit le poids du module, ce qui peut pénaliser la mise en rotation de celui-ci pour un éclairage directionnel, et ce qui peut nécessiter un surdimensionnement des éléments d'entraînement en rotation du module.

Pour remédier aux inconvénients de l'art antérieur susmentionné, l'invention propose un dispositif d'éclairage et/ou de signalisation directionnel d'un véhicule automobile comprenant un module lumineux mobile en rotation autour d'un axe, c'est-à-dire apte à produire au moins un faisceau lumineux orientable. L'axe de rotation est supporté par une embase porteuse d'éléments de guidage en rotation du module autour de l'axe. Selon l'invention, un palier des éléments de guidage en rotation est formé en partie par l'embase et en partie par une pièce de support d'un ventilateur.

Le module peut ainsi être monté en rotation dans le dispositif d'éclairage et/ou de signalisation d'un véhicule automobile de manière à orienter l'axe optique du module en fonction des courbes négociées par le véhicule. La rotation du module lumineux par rapport au dispositif est assurée par l'embase, notamment fixe par rapport à un boitier du dispositif. La géométrie de l'embase peut être définie de manière à ce qu'elle puisse entourer le module lumineux.

Le module lumineux coopère avec l'embase par l'intermédiaire d'éléments de guidage en rotation et des éléments d'entraînement, qui peuvent par ailleurs être rapportés sur l'embase mettent en oeuvre cette rotation. Les éléments de guidage en rotation et les éléments d'entraînement peuvent être coaxiaux selon un axe, notamment vertical, définissant l'axe de rotation du module. Les éléments de guidage en rotation et les éléments d'entraînement peuvent définir respectivement un palier de guidage supérieur et un palier de guidage inférieur, lesquels sont opposés et alignés selon l'axe de rotation du module lumineux.

Le module lumineux peut, par exemple, s'emboiter aux éléments d'entraînement par l'intermédiaire d'un orifice et coopérer avec les éléments de guidage en rotation par l'intermédiaire d'une liaison pivot.

Selon d'autres caractéristiques de l'invention, prises seules ou en combinaison, on pourra prévoir que :
- le palier de guidage est formé par une portion de profil circulaire agencée sur une paroi de de l'embase et par une portion de profil circulaire agencée sur une paroi de la pièce de support disposée en regard de l'embase ;
- le palier de guidage est formé par deux portions de profils équivalents, disposés en miroir ;
- la pièce de support est fixée à l'embase par des organes de fixation agencés de part et d'autre du palier de guidage ; ces organes de fixation pourront notamment comporter des vis de serrage, et on pourra prévoir d'associer à ces organes de fixation des moyens d'indexage permettant d'assurer la position des organes de fixation et donc la position correcte de deux parties formant le palier de guidage ;
- l'embase et la pièce de support sont formées dans un même matériau ; le matériau utilisé pourra notamment être un polymère thermoplastique, et par exemple du polytéréphtalate de butylène (PBT), avantageusement chargé en fibres de verre ;
- la pièce de support présente une partie ouverte pour réception d'une extrémité du ventilateur ;
- la partie ouverte de la pièce de support est formée à l'opposé de partie formant palier de guidage ;
- la pièce de support présente au moins des éléments de fixation du ventilateur ;
- les éléments de fixation du ventilateur comportent au moins une paire de pattes de retenue s'étendant à l'opposé de la partie de la pièce de support formant palier de guidage ;
- des éléments de fixation du ventilateur sont disposés latéralement dans la pièce de support tandis qu'un organe de positionnement est disposé dans une position centrale par rapport à la pièce de support ;
- le module lumineux comporte au moins des dispositifs d'émission de rayons lumineux et des organes de refroidissement ;
- le ventilateur peut s'apparenter à un parallélépipède dont deux des faces opposées, dites face supérieure et face inférieure, sont à base carrée, et le ventilateur se loge dans la pièce de support dans une position telle que la diagonale d'un carré est sensiblement parallèle à l'axe optique des rayons lumineux émis ;
- le ventilateur se situe à l'aplomb d'au moins une partie des organes de refroidissement, par rapport à la direction de l'axe de rotation ; notamment les organes de refroidissement peuvent comporter des ailettes agencées en saillie du module de manière à optimiser la surface d'échange thermique entre celui-ci et l'air ambiant, et le ventilateur est portée par la pièce de support de manière à se trouver à l'aplomb d'au moins une partie de ces ailettes.
- une lentille formant partie des dispositifs d'émission de rayons lumineux est positionnée et fixée en avant de l'embase, tandis que les organes de refroidissement, la pièce de support et le ventilateur sont positionnées et fixés en arrière de cette embase.
- le dispositif comporte un boîtier définissant avec une glace de fermeture un logement pour au moins un module lumineux mobile en rotation ;
- l'embase est fixée sur le boîtier ;
- une pluralité de modules lumineux rotatifs peut être disposée dans le logement défini par le boîtier et la glace de fermeture, celle-ci étant commune à chacun des modules.

D'autres caractéristiques et avantages de l'invention apparaitront plus clairement à la lecture de la description détaillée d'un mode de réalisation de l'invention, donnée à titre d'exemple illustratif et non limitatif et s'appuyant sur les figures parmi lesquelles :
- la figure 1 est une vue partielle, en perspective de trois quart avant, d'un module d'éclairage selon l'invention ;
- la figure 2 est une vue de côté du module d'éclairage de la figure 1 ;
- la figure 3 est une vue en perspective éclatée d'une embase servant de support de rotation au module d'éclairage de la figure 1, d'une pièce de support d'un ventilateur venant former avec l'embase un palier de guidage en rotation du module ;
- la figure 4 est une vue assemblée du support de ventilateur et du ventilateur qu'il supporte ; et
- la figure 5 est une vue en perspective, vue de trois quart arrière, du support de ventilateur de la figure 3

Dans ce qui va suivre, les termes « avant » et « arrière » se comprendront par rapport à la direction principale d'émission de rayons en sortie du module lumineux, le long de l'axe optique du module, et au sens d'émission de ces rayons de l'arrière vers l'avant. Et les références relatives à un positionnement « haut/bas » des composants et/ou des éléments structurels d'un composant seront comprises par rapport à un positionnement de fonctionnement du module dans le véhicule.

Un dispositif d'éclairage et/ou de signalisation 1 configuré selon l'invention pour participer à une fonction d'éclairage directionnel comporte au moins un module lumineux 2 tel qu'il va être décrit à titre d'exemple ci-après. Ce au moins un module lumineux peut notamment être logé, seul ou au voisinage d'autres modules lumineux, dans un boîtier du dispositif fermé par une glace de fermeture.

Un module lumineux 2 comporte des dispositifs d'émission de rayons lumineux, des organes de refroidissement 4 et un carter 6 configuré pour supporter l'ensemble de ces éléments. Le module est rotatif en ce que le carter coopère avec des éléments d'entraînement 8 prévus pour mettre en rotation le carter et notamment les dispositifs d'émission autour d'un axe de rotation A-A, la rotation étant facilitée par au moins des éléments de guidage en rotation 10. Avantageusement, un palier de guidage 11 de ces éléments de guidage en rotation 10 est formé par la coopération d'une partie d'une embase 12 avec une pièce additionnelle 14 rapportée contre cette partie de l'embase.

Le module lumineux 2 est monté pivotant autour de l'axe de rotation A-A par rapport à l'embase 12, par ailleurs fixée sur le boîtier, entre deux positions angulaires extrêmes, définies par l'encombrement du dispositif et la butée du module contre les parois de l'embase et qui permettent, selon la trajectoire du véhicule, une orientation droite / gauche du faisceau lumineux produit par le dispositif d'éclairage et/ou de signalisation.

Les dispositifs d'émission de rayons lumineux comportent au moins une source lumineuse (non visible) et un système optique de mise en forme des rayons, comportant ici un réflecteur (non visible) et une lentille 16.

Les organes de refroidissement 4 comportent notamment un échangeur thermique ou radiateur 18, qui présente une plaque de support 20, sur laquelle est disposé la au moins une source lumineuse, prolongée vers l'arrière du module par une succession d'ailettes de refroidissement 22.

On comprend que la chaleur dégagée par la source lumineuse, et notamment par la plaque de circuits imprimés associée lorsque la source lumineuse est une diode électroluminescente, est évacuée du module par l'intermédiaire de la plaque de support et des ailettes de refroidissement.

Le carter 6 est configuré pour recouvrir au moins partiellement chacun des dispositifs d'émission et des organes de refroidissement du module, et pour assurer leur correcte mise en position les uns par rapport aux autres. Dans l'exemple illustré, le carter est formé de deux coques inférieure 6a et supérieure 6b disposées en regard et fixées, mais il sera compris que le nombre de sources lumineuses et de réflecteurs, ici un de chaque pour chaque coque, pourra varier de sorte qu'une seule coque est nécessaire pour former le carter.

Chaque coque s'étend longitudinalement, c'est-à-dire dans la direction de l'axe optique du module, du radiateur 18 à la lentille 16.

La coque supérieure 6b comporte un pion 24 agencé en saillie de sa face supérieure pour coopérer avec l'embase 12 et former des éléments de guidage en rotation du module, tandis que la coque inférieure comporte un alésage creusé depuis sa face inférieure dont la section forme une empreinte complémentaire d'un élément mâle 26 des éléments d'entraînement 8 portés par l'embase.

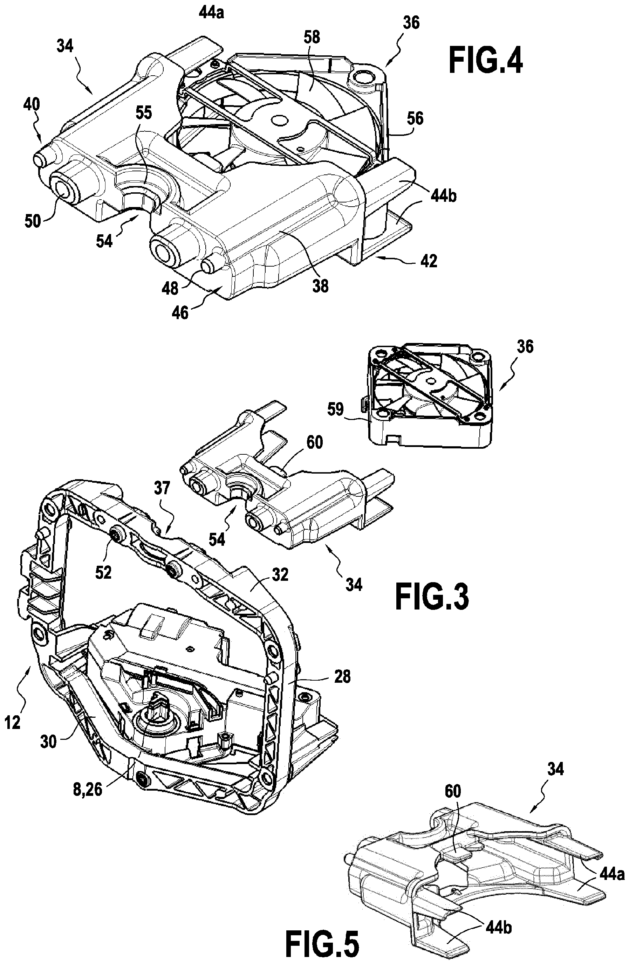

Le module est, dans le mode de réalisation, illustré entouré par l'embase 12 qui forme un cadre. L'embase est fixe, ici rendue solidaire du boîtier du dispositif d'éclairage et/ou de signalisation. Le cadre formant embase, notamment visible sur la figure 3, comporte deux montants verticaux 28 qui s'étendent parallèlement ou sensiblement parallèlement et qui portent des moyens de fixation, dont certains peuvent être réglables, de l'embase au boîtier du dispositif d'éclairage et/ou de signalisation, ici non représenté, et il comporte une barre supérieure 30 et une barre inférieure 32 reliant entre elles les extrémités supérieures et inférieures des montants verticaux.

La barre inférieure 32 est dans le cas illustré solidaire des éléments d'entraînement 8 et de l'élément mâle 26 associé, étant entendu qu'un palier inférieur de guidage (ici non présent) en rotation pourrait être formé au niveau de cette barre inférieure.

A l'opposé des éléments d'entraînement, c'est-à-dire de l'autre côté du module lorsque celui-ci est entouré du cadre formant l'embase, on prévoit un palier de guidage 11 en rotation formé en partie par la barre supérieure 30 de l'embase 12 et en partie par la pièce additionnelle 14 consistant en une pièce de support 34 d'un ventilateur 36.

Plus particulièrement, la barre supérieure comporte sensiblement en son centre une première encoche 37 qui forme une première partie du palier de guidage 11. Cette première encoche a un profil, dans un plan de coupe perpendiculaire à l'axe de rotation A-A, qui présente la forme d'un demi-cercle de dimension définie en adéquation avec le diamètre du pion amené à coopérer avec le palier de guidage 11 que participe à former cette première encoche.

Dans le mode de réalisation illustré, les éléments d'entraînement 8 jouent le rôle des éléments de guidage en rotation inférieurs. Ces éléments d'entraînement 8 et les éléments de guidage en rotation 10 réalisés sur le montant opposé, ici supérieur, du cadre sont agencés de façon coaxiale ou sensiblement coaxiale selon un axe A-A de rotation du module. On définit ainsi un palier supérieur et un palier inférieur, lesquels sont opposés et alignés selon l'axe A-A, ici vertical.

Tel que cela a pu être précisé précédemment, le module présente sur son carter 6 des organes complémentaires respectivement des éléments d'entraînement et des paliers de guidage des éléments de guidage en rotation, et notamment par la présence d'un pion 24 dimensionné pour être logé dans le palier de guidage 11, éventuellement associé à des moyens d'arrêt en position pour empêcher le désengagement du pion hors du palier. On pourra prévoir un roulement pour faciliter la rotation du pion dans le palier et donc la rotation du module autour de l'axe de rotation A-A, sans que la présence de ce roulement soit indispensable au bon fonctionnement de l'invention. A l'extrémité opposé, au niveau de la barre inférieure de l'embase, et à titre d'exemple non limitatif, le carter pourra s'emboiter sur l'élément mâle 26 des éléments d'entraînement 8 par l'intermédiaire d'un orifice situé sur sa face inférieure et présentant une forme complémentaire, par exemple en section étoilée, de l'élément mâle.

On va maintenant décrire plus en détails les éléments de guidage en rotation supérieurs, c'est-à-dire les éléments agencés à l'opposé des éléments d'entraînement par rapport au module, et en se référant notamment aux figures 3 à 5.

La pièce de support 34 est configurée pour d'une part délimiter un alésage formant palier de guidage 11 en rotation lors de son accostage contre l'embase 12, et pour d'autre part recevoir au moins partiellement le ventilateur 36, de manière à le supporter dans une position de fonctionnement déterminée. On comprend que par « supporter » le ventilateur, on entend l'action de reprendre les efforts exercés sur le composant et de les transmettre à la structure du véhicule automobile. Dès lors, c'est le boîtier du projecteur et non le carter du module qui est impacté par le poids notamment du ventilateur, et les mouvements de rotation du module peuvent être plus rapides et plus fiables.

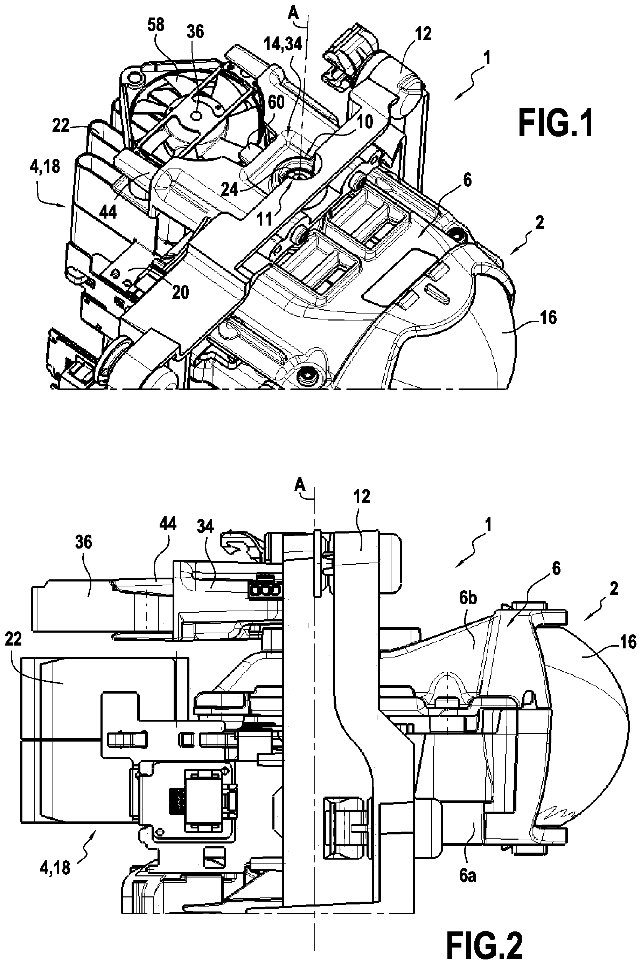

On a pu illustrer sur les figures 1 et 2 une position de fonctionnement souhaitée du ventilateur à l'aplomb des ailettes 22 des organes de refroidissement 4. Dans cette position, le ventilateur 36 participe à la circulation d'air entre les ailettes 22 et au refroidissement efficace du module.

La pièce de support 34 comporte un corps 38, prolongé à une première extrémité 40 par une pluralité de pions et de fûts et prolongé à une deuxième extrémité 42 opposée par des pattes de retenue 44 parallèles ou sensiblement parallèles entre elles.

A la première extrémité 40, une paroi d'extrémité transversale 46 porte dans l'exemple illustré deux pions 48 et deux fûts 50 qui s'étendent à l'opposé du corps 38 de la pièce de support et qui sont configurés pour coopérer avec des éléments femelles correspondants agencés sur la barre supérieure 32 de l'embase. On comprend que les pions 48 permettent un indexage de positionnement de la pièce de support lors de son rapprochement contre la barre supérieure de l'embase et que les fûts permettent la fixation de la pièce de support sur l'embase par l'intermédiaire de vis ou pions de fixation 52 passant à travers ces fûts, formant ainsi des organes de fixation.

Les pions et les fûts sont agencés sur la paroi d'extrémité transversale 46 de part et d'autre d'une deuxième encoche 54 qui forme une deuxième partie du palier de guidage complémentaire de la première partie du palier de guidage formé par la première encoche. De façon miroir à ce qui a pu être décrit précédemment pour la première encoche 37 de la barre supérieure 32 de l'embase 12, la deuxième encoche 54 a un profil, dans un plan de coupe perpendiculaire à l'axe de rotation A-A, qui présente la forme d'un demi-cercle de dimension définie en adéquation avec le diamètre du pion amené à coopérer avec le palier de guidage 11 que participe à former cette deuxième encoche. On comprend de ce qui précède que les première 37 et deuxième 54 encoches présentent des profils symétriques dont l'assemblage permet la formation d'un palier de guidage en rotation de section circulaire. Sans sortir du contexte de l'invention, on pourrait prévoir que les encoches formant le palier présentent des profils différents et que l'une des encoches est plus profonde que l'autre encoche et consiste en un peu plus de la moitié du palier, dès lors que, lors de la fixation de la pièce de support contre l'embase, la face externe de la paroi d'extrémité transversale étant plaquée contre l'embase, le rapprochement des deux encoches forment un palier de guidage au pourtour circulaire.

Par ailleurs, il convient de noter que la deuxième encoche 54 présente un épaulement 55 dans le prolongement du bord supérieur de l'encoche. On comprendra que cet épaulement peut permettre le logement de moyens d'arrêt en position d'un pion 24 à l'intérieur du palier de guidage 11. La première encoche 37 comportera avantageusement un épaulement symétrique (ici non visible sur la figure 3).

Afin de faciliter la fixation des deux pièces formant le palier 11 des éléments de guidage en rotation 10, à savoir l'embase 12 et la pièce de support 34, on pourra prévoir que ces deux pièces sont réalisées dans un même matériau et par exemple un polymère thermoplastique du type polytéréphtalate de butylène (PBT), avantageusement chargé en fibres de verre.

La face interne de cette paroi d'extrémité transversale 46 forme la paroi de fond d'une cavité définie par le corps 38 creusé depuis l'extrémité opposée entre les pattes de retenue 44. Cette cavité permet d'une part de réduire le poids de la pièce, et elle permet l'insertion au moins partielle du ventilateur dans la pièce de support pour son positionnement correct avant fixation.

Les pattes de retenues 44 sont configurés pour coopérer par engagement avec des parties d'accroche du ventilateur 36. Des moyens de fixation additionnels, ici non représentés, peuvent être prévus pour figer la position du ventilateur entre les pattes de retenue. Plus particulièrement, deux premières pattes de retenue 44a disposées latéralement du même côté du corps 38 forment ensemble un élément de retenue du ventilateur, l'écartement de ces premières pattes de retenue étant tel que le ventilateur peut dans son épaisseur venir se loger entre ces deux premières pattes. Deux deuxièmes pattes de retenue 44b forment latéralement à l'opposé un élément de retenue similaire.

Les pattes de retenue 44 s'étendent horizontalement vers l'arrière de la pièce de support 34, de manière à ce que le ventilateur 36 se situe à l'aplomb des ailettes de refroidissement 22, selon la direction de l'axe de rotation A-A du module.

Le ventilateur 36 comporte un boîtier 56 à l'intérieur duquel sont agencées des pales rotatives 58. Le boîtier présente une forme de parallélépipède avec une face supérieure 36a et une face inférieure opposée 36b reliées l'une à l'autre par des parois latérales 36c. Les faces supérieure et inférieure, à base carrée, sont dégagées pour laisser passage au flux d'air perturbé par la rotation des pales. A chaque coin du boîtier, des alésages sont prévus traversants pour permettre la fixation du ventilateur.

Dans la position assemblée du ventilateur 36 et de pièce de support 34, notamment visible sur la figure 4, le ventilateur est orienté de sorte que l'une des diagonales du carré soit alignée ou parallèle à l'axe optique. Ainsi, un premier sommet du ventilateur pointe vers la pièce de support, un premier coin 59 étant sensiblement centré par rapport au corps 38, et ce corps présente un doigt de positionnement 60 s'étendant à l'aplomb du premier coin 59 du boîtier correspondant. Le doigt de positionnement participe au maintien du ventilateur par rapport à la pièce de support, en permettant d'éviter le basculement du ventilateur. Cet agencement du ventilateur correspond à une fixation sur la pièce de support avec deux zones latérales de positionnement et de fixation au niveau des pattes de retenue et une zone centrale au moins de positionnement.

Telle qu'elle vient d'être décrite, il peut être observé que dans la position assemblée du ventilateur et de la pièce de support, la surface active du ventilateur, c'est-à-dire la surface non recouverte par la pièce de support, est la plus importante possible.

On peut observer sur la figure 2 un agencement « en escalier » de la barre supérieure 32 de l'embase fixe 12, de la pièce de support 34 et du ventilateur 36 qui sont alignés sur trois plans parallèles agencés de sorte que chaque composant se positionne à un niveau légèrement inférieur à celui du composant précédent. Notamment, le ventilateur n'est pas centré sur la hauteur de la pièce de support. On rapproche de la sorte le ventilateur des ailettes de refroidissement pour optimiser la fonction de refroidissement.

Dans le module d'éclairage selon l'invention, on observe que les organes de refroidissement thermique suivent le mouvement de rotation du module puisque la plaque de support de la source lumineuse, porteuse des ailettes de refroidissement, est solidaire en rotation du carter 6. Et dans le même temps, au cours du déplacement pivotant du module, le ventilateur 36 reste quant à lui fixe puisque solidaire de l'embase 12 fixée au boîtier du dispositif d'éclairage et/ou de signalisation. Il est notable que le déplacement relatif du ventilateur par rapport aux ailettes de refroidissement participe à la perturbation du flux d'air amené à passer entre les ailettes, ce qui a pour effet d'améliorer l'efficacité de l'échange thermique avec le radiateur.

La description qui précède vise à expliquer comment l'invention permet d'atteindre les objectifs qu'elle s'est fixés et notamment de proposer un dispositif d'éclairage et/ou de signalisation qui permette la réalisation d'un faisceau d'éclairage directionnel, avec au moins un module lumineux pour lequel on a modifié la structure d'une pièce pour lui donner une double fonction. Il en résulte un double avantage, dans un contexte de réduction du nombre de pièces à prévoir pour la réalisation des dispositifs d'éclairage et/ou de signalisation, consistant d'une part en le maintien du ventilateur par des éléments fixes par rapport au boîtier du dispositif et distincts du module tournant et d'autre part en la simplification du carter du module qui ne doit plus jouer le rôle de support du ventilateur. La forme de certaines pièces décrites ci-dessus, et par exemple celle de la pièce de support et/ou celle du ventilateur pourrait être modifiée dès lors que la pièce de support permet à la fois la réalisation d'un palier de guidage avec l'embase et le positionnement et la fixation d'un radiateur, à distance du corps du module rotatif. On pourra également envisager, sans sortir du contexte de l'invention, que l'embase ne présente pas une forme de cadre, mais par exemple la forme de deux barres supérieures et inférieures indépendantes l'une de l'autre et portant comme précédemment des éléments d'entraînement et des éléments de guidage en rotation.

## Revendications

1. Dispositif d'éclairage et/ou de signalisation directionnel (1) d'un véhicule automobile comprenant au moins :
- un module lumineux (2) mobile en rotation autour d'un axe (A-A) ;
- des éléments de guidage (10) en rotation de ce module lumineux (2) autour de l'axe (A-A) ;
- une embase (12) porteuse d'au moins une partie des éléments de guidage en rotation (10) ;
- un ventilateur (36) ;
**caractérisé en ce qu'**un palier (11) des éléments de guidage en rotation (10) est formé en partie par l'embase (12) et en partie par une pièce de support (34) du ventilateur (36).

2. Dispositif d'éclairage et/ou de signalisation directionnel selon la revendication 1, **caractérisé en ce que** le palier de guidage (11) est formé par une portion de profil circulaire agencée sur une paroi de l'embase (12) et par une portion de profil circulaire agencée sur une paroi de la pièce de support (34) disposée en regard de l'embase.

3. Dispositif d'éclairage et/ou de signalisation directionnel selon la revendication 2, **caractérisé en ce que** le palier de guidage (11) est formé par deux portions de profils équivalents, disposés en miroir.

4. Dispositif d'éclairage et/ou de signalisation directionnel selon l'une des revendications précédentes, **caractérisé en ce que** la pièce de support (34) est fixée à l'embase (12) par des organes de fixation (52) agencés de part et d'autre du palier de guidage (11).

5. Dispositif d'éclairage et/ou de signalisation directionnel selon l'une des revendications précédentes, **caractérisé en ce que** l'embase (12) et la pièce de support (34) sont formées dans un même matériau.

6. Dispositif d'éclairage et/ou de signalisation directionnel selon l'une des revendications précédentes, **caractérisé en ce que** la pièce de support (34) présente une partie ouverte pour réception d'une extrémité du ventilateur (36).

7. Dispositif d'éclairage et/ou de signalisation directionnel selon la revendication précédente, **caractérisé en ce que** la partie ouverte de la pièce de support (34) est formée à l'opposé de partie formant palier de guidage (11).

8. Dispositif d'éclairage et/ou de signalisation directionnel selon l'une des revendications précédentes, **caractérisé en ce que** la pièce de support (34) présente au moins des éléments de fixation (44) du ventilateur (36).

9. Dispositif d'éclairage et/ou de signalisation directionnel selon la revendication précédente, **caractérisé en ce que** les éléments de fixation (44) du ventilateur (36) comportent au moins une paire de pattes de retenue (44) s'étendant à l'opposé de la partie de la pièce de support (34) formant palier de guidage (11).

10. Dispositif d'éclairage et/ou de signalisation directionnel selon l'une des revendications 8 ou 9, **caractérisé en ce que** les éléments de fixation (44) du ventilateur (36) sont disposés latéralement dans la pièce de support (34) tandis qu'un organe de positionnement (60) est disposé dans une position centrale par rapport à la pièce de support.

11. Dispositif d'éclairage et/ou de signalisation directionnel selon l'une des revendications précédentes, **caractérisé en ce que** le module lumineux (2) comporte au moins des dispositifs d'émission de rayons lumineux et des organes de refroidissement (4).

12. Dispositif d'éclairage et/ou de signalisation directionnel selon la revendication précédente, **caractérisé en ce que** le ventilateur (36) se situe à l'aplomb d'au moins une partie des organes de refroidissement (4), par rapport à la direction de l'axe de rotation (A-A).

13. Dispositif d'éclairage et/ou de signalisation directionnel selon l'une des revendications précédentes, **caractérisé en ce qu'**il comporte un boîtier définissant avec une glace de fermeture un logement pour le au moins un module lumineux mobile (2) en rotation.

14. Dispositif d'éclairage et/ou de signalisation directionnel selon la revendication précédente, **caractérisé en ce que** l'embase (12) est fixée sur le boîtier.

## Patentansprüche

1. Vorrichtung zur gerichteten Beleuchtung und/oder Signalisierung (1) eines Kraftfahrzeugs, umfassend zumindest:
- ein Leuchtmodul (2), das um eine Achse (A-A) drehbeweglich ist;
- Elemente zur Drehführung (10) dieses Leuchtmoduls (2) um die Achse (A-A);
- einen Sockel (12), der mindestens einen Abschnitt der Elemente zur Drehführung (10) trägt;
- einen Ventilator (36);
**dadurch gekennzeichnet, dass** ein Lager (11) der Elemente zur Drehführung (10) zum Teil von dem Sockel (12) und zum Teil von einem Tragteil (34) des Ventilators (36) gebildet ist.

2. Vorrichtung zur gerichteten Beleuchtung und/oder Signalisierung nach Anspruch 1, **dadurch gekennzeichnet, dass** das Führungslager (11) von einem Kreisprofilabschnitt, der auf einer Wand des Sockels (12) angeordnet ist, und von einem Kreisprofilabschnitt, der auf einer Wand des Tragteils (34) angeordnet ist, das gegenüber des Sockels angeordnet ist, gebildet ist.

3. Vorrichtung zur gerichteten Beleuchtung und/oder Signalisierung nach Anspruch 2, **dadurch gekennzeichnet, dass** das Führungslager (11) von zwei Abschnitten äquivalenter Profile gebildet ist, die gespiegelt angeordnet sind.

4. Vorrichtung zur gerichteten Beleuchtung und/oder Signalisierung nach einem der vorhergehenden Ansprüche, **dadurch gekennzeichnet, dass** das Tragteil (34) durch Befestigungseinrichtungen (52) am Sockel (12) befestigt ist, die beiderseits des Führungslagers (11) angeordnet sind.

5. Vorrichtung zur gerichteten Beleuchtung und/oder Signalisierung nach einem der vorhergehenden Ansprüche, **dadurch gekennzeichnet, dass** der Sockel (12) und das Tragteil (34) aus einem selben Material gebildet sind.

6. Vorrichtung zur gerichteten Beleuchtung und/oder Signalisierung nach einem der vorhergehenden Ansprüche, **dadurch gekennzeichnet, dass** das Tragteil (34) einen offenen Bereich zur Aufnahme eines Endes des Ventilators (36) aufweist.

7. Vorrichtung zur gerichteten Beleuchtung und/oder Signalisierung nach dem vorhergehenden Anspruch, **dadurch gekennzeichnet, dass** der offene Bereich des Tragteils (34) gegenüber des Bereichs ausgebildet ist, der das Führungslager (11) bildet.

8. Vorrichtung zur gerichteten Beleuchtung und/oder Signalisierung nach einem der vorhergehenden Ansprüche, **dadurch gekennzeichnet, dass** das Tragteil (34) zumindest Befestigungselemente (44) des Ventilators (36) aufweist.

9. Vorrichtung zur gerichteten Beleuchtung und/oder Signalisierung nach dem vorhergehenden Anspruch, **dadurch gekennzeichnet, dass** die Befestigungselemente (44) des Ventilators (36) mindestens ein Paar Halteansätze (44) aufweisen, die sich gegenüber des Bereichs des Tragteils (34) erstrecken, der das Führungslager (11) bildet.

10. Vorrichtung zur gerichteten Beleuchtung und/oder Signalisierung nach einem der Ansprüche 8 oder 9, **dadurch gekennzeichnet, dass** die Befestigungselemente (44) des Ventilators (36) seitlich im Tragteil (34) angeordnet sind, während ein Positionierungselement (60) in einer Position angeordnet ist, die bezogen auf das Tragteil mittig ist.

11. Vorrichtung zur gerichteten Beleuchtung und/oder Signalisierung nach einem der vorhergehenden Ansprüche, **dadurch gekennzeichnet, dass** das Leuchtmodul (2) zumindest Vorrichtungen zum Aussenden von Lichtstrahlen und Kühleinrichtungen (4) aufweist.

12. Vorrichtung zur gerichteten Beleuchtung und/oder Signalisierung nach dem vorhergehenden Anspruch, **dadurch gekennzeichnet, dass** sich der Ventilator (36) im Lot zu mindestens einem Bereich der Kühleinrichtungen (4) bezogen auf die Richtung der Drehachse (A-A) befindet.

13. Vorrichtung zur gerichteten Beleuchtung und/oder Signalisierung nach einem der vorhergehenden Ansprüche, **dadurch gekennzeichnet, dass** sie ein Gehäuse aufweist, das mit einer Verschlussscheibe eine Aufnahme für das mindestens eine drehbewegliche Leuchtmodul (2) definiert.

14. Vorrichtung zur gerichteten Beleuchtung und/oder Signalisierung nach dem vorhergehenden Anspruch, **dadurch gekennzeichnet, dass** der Sockel (12) auf dem Gehäuse befestigt ist.

## Claims

1. Directional lighting and/or signalling device (1) of a motor vehicle comprising at least:
- one light module (2) that is rotationally mobile about an axis (A-A);
- guiding elements (10) for rotationally guiding this light module (2) about the axis (A-A);
- a base (12) supporting at least a part of the rotation guiding elements (10);
- a fan (36);
**characterized in that** a bearing (11) of the rotation guiding elements (10) is formed partly by the base (12) and partly by a support piece (34) supporting the fan (36).

2. Directional lighting and/or signalling device according to Claim 1, **characterized in that** the guiding bearing (11) is formed by a portion of circular profile arranged on a wall of the base (12) and by a portion of circular profile arranged on a wall of the support piece (34) arranged facing the base.

3. Directional lighting and/or signalling device according to Claim 2, **characterized in that** the guiding bearing (11) is formed by two portions of equivalent profiles, arranged mirror-fashion.

4. Directional lighting and/or signalling device according to one of the preceding claims, **characterized in that** the support piece (34) is fixed to the base (12) by fixing members (52) arranged on either side of the guiding bearing (11) .

5. Directional lighting and/or signalling device according to one of the preceding claims, **characterized in that** the base (12) and the support piece (34) are formed in one and the same material.

6. Directional lighting and/or signalling device according to one of the preceding claims, **characterized in that** the support piece (34) has an open part for receiving an end of the fan (36).

7. Directional lighting and/or signalling device according to the preceding claim, **characterized in that** the open part of the support piece (34) is formed opposite the part forming the guiding bearing (11).

8. Directional lighting and/or signalling device according to one of the preceding claims, **characterized in that** the support piece (34) has at least fixing elements (44) for fixing the fan (36) .

9. Directional lighting and/or signalling device according to the preceding claim, **characterized in that** the fixing elements (44) for fixing the fan (36) comprise at least one pair of retaining tabs (44) extending opposite the part of the support piece (34) forming the guiding bearing (11).

10. Directional lighting and/or signalling device according to one of Claims 8 and 9, **characterized in that** the fixing elements (44) for fixing the fan (36) are arranged laterally in the support piece (34) while a positioning member (60) is arranged in a central portion relative to the support piece.

11. Directional lighting and/or signalling device according to one of the preceding claims, **characterized in that** the light module (2) comprises at least light ray-emitting devices and cooling members (4).

12. Directional lighting and/or signalling device according to the preceding claim, **characterized in that** the fan (36) is situated in line with at least a part of the cooling members (4), relative to the direction of the axis of rotation (A-A).

13. Directional lighting and/or signalling device according to one of the preceding claims, **characterized in that** it comprises a casing defining, with a closing outer lens, a housing for the at least one rotationally mobile light module (2) .

14. Directional lighting and/or signalling device according to the preceding claim, **characterized in that** the base (12) is fixed onto the casing.
